## Europäisches Patentamt
## European Patent Office
## Office européen des brevets

(19)

(11) Numéro de publication: **0 057 340**
**B1**

(12)

# FASCICULE DE BREVET EUROPEEN

(45) Date de publication du fascicule du brevet:
**08.10.86**

(51) Int. Cl.⁴: **H 02 M 1/08**, H 02 M 7/12

(21) Numéro de dépôt: **81402057.4**

(22) Date de dépôt: **23.12.81**

(54) **Dispositif automatique de compensation des variations de tension du secteur alternatif polyphasé appliqué à un convertisseur alternatif continu.**

(30) Priorité: **04.02.81 FR 8102085**

(43) Date de publication de la demande:
**11.08.82 Bulletin 82/32**

(45) Mention de la délivrance du brevet:
**08.10.86 Bulletin 86/41**

(84) Etats contractants désignés:
**DE FR GB IT NL**

(56) Documents cités:
**FR - A - 1 564 347**
**FR - A - 2 195 386**
**FR - A - 2 212 583**
**GB - A - 2 002 600**
**US - A - 3 335 353**
**US - A - 3 757 230**

(73) Titulaire: **COMPAGNIE INTERNATIONALE POUR L'INFORMATIQUE CII - HONEYWELL BULL (dite CII-HB), 94, avenue Gambetta, F-75020 Paris (FR)**

(72) Inventeur: **André, Gérard, 94 avenue Gambetta, F-75020 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention concerne un dispositif automatique de compensation des variations de tension du secteur électrique alternatif polyphasé, appliqué à un convertisseur «alternatif-continu».

Ce dispositif s'applique plus particulièrement aux convertisseurs de type alternatif-continu, de puissance, utilisés notamment dans l'alimentation des ordinateurs.

On sait que la plupart des convertisseurs «alternatif-continu» et notamment les convertisseurs de forte puissance, comprennent des redresseurs à déclenchement contrôlés, connus sous le nom de thyristors. Ces redresseurs contrôlés sont largement utilisés en électrotechnique, aussi bien dans la commande des moteurs à courant continu (moteurs de traction par exemple), que dans l'élaboration de tensions continues de forte puissance.

Dans ces convertisseurs, le contrôle de la tension moyenne redressée s'effectue par action sur l'angle d'amorçage de chacun des thyristors. Ce contrôle peut être manuel (pour les moteurs de traction) ou automatique (pour l'alimentation des ordinateurs par exemple). Dans ce dernier cas, la tension de sortie filtrée est généralement comparée à une tension référence et elle est maintenue constante par action de moyens de régulation qui agissent sur l'angle d'amorçage de chacun des thyristors du convertisseur. Dans le cas d'un contrôle manuel, les fluctuations de la tension du secteur alternatif se traduisent par des fluctuations proportionnelles de la tension moyenne redressée. Dans le cas d'un contrôle automatique, les fluctuations de la tension moyenne redressée sont compensées par les moyens de régulation qui agissent sur l'angle d'amorçage des thyristors, dans les limites de rapidité et de dynamique des moyens de régulation. On voit, donc que la compensation des fluctuations de la tension du secteur alternatif d'entrée, effectuée par prélèvement de la tension redressée en sortie du convertisseur et par comparaison de cette tension redressée avec une tension de référence, peut, lorsque ces fluctuations ont une amplitude importante, être impossible.

Un exemple de convertisseur avec régulation de la tension redressée est donné dans le brevet US-A-3 335 353.

Le brevet français FR-A-1 564 347 décrit un convertisseur monophasé commandé par un dispositif permettant de compenser les variations de tension du secteur sans utiliser des moyens de régulation de la tension moyenne redressée. Pour cela un générateur de dents de scie produit à chaque demie alternance de la tension du secteur, un signal variant en fonction du temps selon la même équation que la variation de la tension redressée en fonction de l'angle d'allumage du thyristor et ce signal a une amplitude proportionnelle à la tension du secteur. L'allumage du thyristor est produite lorsque ce signal en dents de scie coïncide avec une tension de référence indépendante de la tension du secteur. Ce dispositif réalise bien la compensation recherché à condition que la tension de référence ne soit pas influencée par les variations de tension du secteur, ce qui nécessite un circuit générateur de tension de référence bien étudié.

Un autre dispositif de compensation des variations de tension du secteur est décrit dans la demande de brevet FR-A-2 212 583. Une tension en dents de scie est obtenue par intégration d'un signal lié à la tension d'alimentation et superposition à un signal dépendant d'un autre paramètre tel que la température. Une impulsion de commande est générée lorsque la tension en dents de scie est égale à une tension de référence fonction de la fréquence et/ou de la tension d'alimentation. Ce dispositif vise à compenser plusieurs paramètres en même temps mais la réalisation proposée ne permet cependant qu'une compensation approximative des variations de tension du secteur.

L'invention telle qu'elle est définie dans les revendications a pour objet un circuit de compensation des variations de la tension du secteur permettant une compensation parfaite au moyen d'un dispositif simple ne comportant qu'un nombre très restreint de composants.

D'autres caractéristiques et avantages de l'invention ressortiront mieux de la description qui va suivre, donnée en référence aux dessins annexés dans lesquels:

– la figure 1 représente schématiquement un dispositif automatique de compensation, conforme à l'invention, appliqué à un convertisseur «alternatif-continu»,

– la figure 2 est un diagramme qui représente les signaux électriques des différentes phases du secteur, appliqués au dispositif de l'invention et au convertisseur,

– la figure 3 est un diagramme qui permet de mieux comprendre le fonctionnement du dispositif de compensation de l'invention,

– la figure 4 est un diagramme des signaux que l'on peut observer sur les sorties de certains moyens du dispositif.

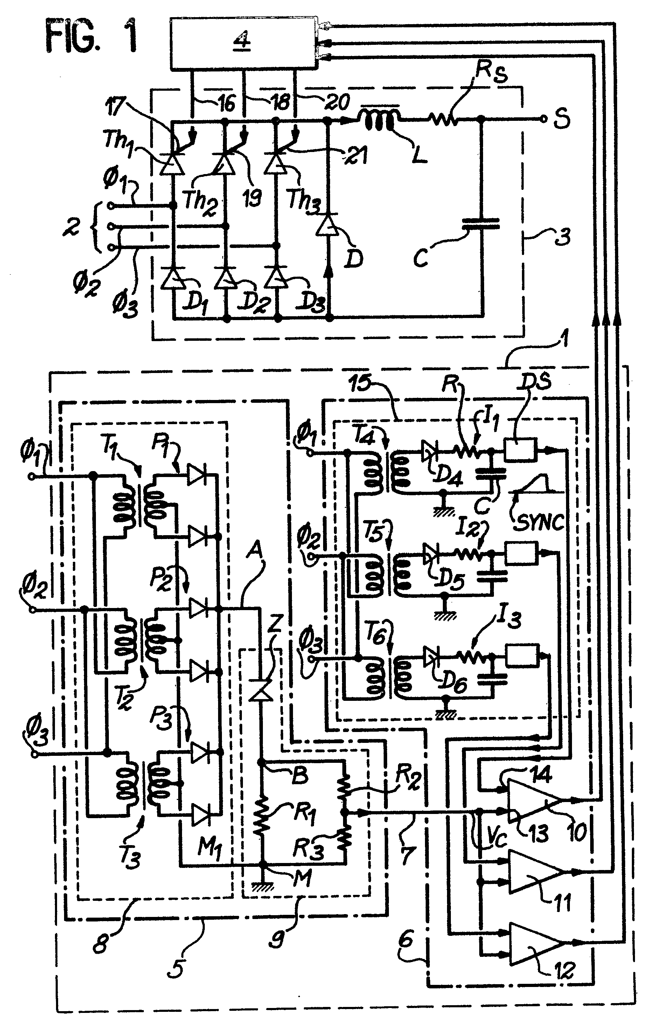

La figure 1 représente schématiquement un dispositif automatique de compensation 1 des variations du secteur électrique alternatif 2, polyphasé, alimentant un convertisseur alternatif-continu 3. Les différentes phases du secteur sont désignées par $\Phi_1$, $\Phi_2$, $\Phi_3$, sur la figure. La sortie du convertisseur est représentée en S et celui-ci comprend, de manière connue, pour chacune des phases du secteur, des redresseurs tels que des thyristors par exemple, à déclenchement contrôlé par impulsions. Ces thyristors sont désignés par $Th_1$, $Th_2$, $Th_3$. Les impulsions qui leur sont appliquées par un générateur d'impulsions 4 présentent une période réglable pour chaque thyristor, de manière à contrôler l'angle d'amorçage de celui-ci. De manière connue, chacun des thyristors peut être associé à un redresseur telle qu'une diode; ces diodes pour les différentes phases, sont représentées en $D_1$, $D_2$, $D_3$. Enfin, ce convertisseur comprend de manière connue une diode D de roue libre et un filtre constitué par une self L et un condensateur C. On a désigné par $R_s$ une résistance placée en série avec la self, pour limiter le courant dans celle-ci. La tension redressée est disponible sur la sortie S du convertisseur.

Le dispositif automatique de compensation 1 conforme à l'invention, comprend des moyens 5 pour déterminer les variations de tension à l'entrée de chaque redresseur (Th$_1$, Th$_2$, Th$_3$) à déclenchement, et des moyens de compensation 6 de l'angle d'amorçage de chaque redresseur à déclenchement. Les moyens de compensation 6 sont reliés à une sortie 7 des moyens 5 de détermination de variation de tension d'entrée. Les sorties de ces moyens de compensation sont reliées à des entrées de commande du générateur d'impulsions 4, pour régler la période des impulsions de déclenchement de chaque redresseur à déclenchement contrôlé et donc, pour régler l'angle d'amorçage de chaque redresseur à déclenchement contrôlé.

Comme on le verra plus loin en détail, les moyens 5 qui permettent de déterminer les variations de tension à l'entrée de chaque redresseur et les moyens de compensation 6 de l'angle d'amorçage de chaque redresseur sont reliés à chacune des phases $\Phi_1$, $\Phi_2$, $\Phi_3$ du secteur alternatif 2.

Les moyens 5 qui permettent de déterminer les variations de tension à l'entrée de chaque redresseur à déclenchement Th$_1$, Th$_2$, Th$_3$ comprennent pour chacun de ces redresseurs, des moyens 8 reliés au secteur 2 pour redresser la tension d'entrée et des moyens 9 de prélèvement d'une tension de contrôle V$_c$ dont la valeur est une fraction de valeur prédéterminée de la tension redressée en sortie des moyens 8. Les moyens de compensation 6 comprennent, pour chaque redresseur à déclenchement, un comparateur. Les comparateurs associés à chaque redresseur à déclenchement sont référencés 10, 11, 12, sur la figure. Chaque comparateur, tel que le comparateur 10 par exemple présente une première entrée 13 qui est reliée à la sortie 7 des moyens de prélèvement 9, et une deuxième entrée 14 qui est reliée à une sortie de moyens de synchronisation 15, faisant partie des moyens de compensation 6. Ces moyens de synchronisation sont reliés aux différentes phases $\Phi_1$, $\Phi_2$, $\Phi_3$ du secteur alternatif et fournissent en sortie, pour chaque redresseur à déclenchement, un signal de synchronisation qui, on le verra plus tard, est l'enveloppe des impulsions de déclenchement des redresseurs; ce signal établit une relation linéaire entre les variations de l'angle d'amorçage de chaque redresseur à déclenchement, et les variations de la tension de sortie de celui-ci. Les signaux de sortie des comparateurs sont appliqués à des entrées de commande du générateur d'impulsions 4, pour commander le réglage de la période des impulsions de déclenchement de chaque redresseur à déclenchement et donc pour commander l'angle d'amorçage de chaque redresseur à déclenchement contrôlé.

Les moyens 8 qui permettent de redresser la tension d'entrée et qui sont reliés aux moyens 9 pour prélever une fraction de cette tension redressée sont constitués, pour chaque phase du secteur, par un transformateur. Ces transformateurs sont représentés en T$_1$, T$_2$, T$_3$ sur la figure. Leurs enroulements primaires sont reliés respectivement à chacune des phases $\Phi_1$, $\Phi_2$, $\Phi_3$ du secteur, tandis que leurs enroulements secondaires alimentent respectivement des ponts redresseurs P$_1$, P$_2$, P$_3$. Ces transformateurs sont de préférence des transformateurs abaisseurs de tension. Les moyens de prélèvement 9, qui sont reliés à la sortie des moyens 8, sont constitués par un circuit comprenant une diode de Zener Z reliée en série avec une réstance R$_1$ de limitation de courant. La sortie 7 de ces moyens de prélèvement est constituée par une borne commune à deux résistances R$_2$, R$_3$ qui sont reliées en série et connectées en parallèles avec la résistance de limitation R$_1$.

Les moyens de synchronisation 15 comprennent pour chaque phase, un transformateur dont le primaire est relié à la phase correspondante du secteur et dont le secondaire alimente un circuit intégrateur par l'intermédiaire d'un redresseur. Sur cette figure, les transformateurs sont représentés en T$_4$, T$_5$, T$_6$, tandis que les redresseurs sont représentés en D$_4$, D$_5$, D$_6$. Les circuits intégrateurs sont désignés par I$_1$, I$_2$, I$_3$ et chacun d'eux est constitué de manière connue, par une résistance R associée à un condensateur C. La sortie de chaque intégrateur peut être reliée à un détecteur de seuil DS qui permet d'assurer la retombée du signal SYNC de sortie de cet intégrateur. Les sorties de ces détecteurs de seuil sont reliées aux deuxièmes entrées des comparateurs 10, 11, 12.

Comme on le verra plus loin en détail, le générateur d'impulsions 4 de déclenchement des redresseurs Th$_1$, Th$_2$, Th$_3$ du convertisseur peut être constitué, pour chaque phase du secteur, par une bascule de détection de seuil (de type trigger de Schmidt par exemple) dont l'entrée constitue l'entrée de commande du générateur et dont la sortie est reliée à une gâchette de déclenchement du redresseur correspondant du convertisseur. L'entrée de chacune de ces bascules est reliée à la sortie du comparateur correspondant des moyens de compensation 15. C'est ainsi par exemple que sur la figure, la sortie 16 du générateur 4 est reliée à la gâchette 17 du thyristor Th$_1$, tandis que les sorties 18, 20, du générateur 4 sont respectivement reliées aux gâchettes 19, 21 des thyristors Th$_2$, Th$_3$.

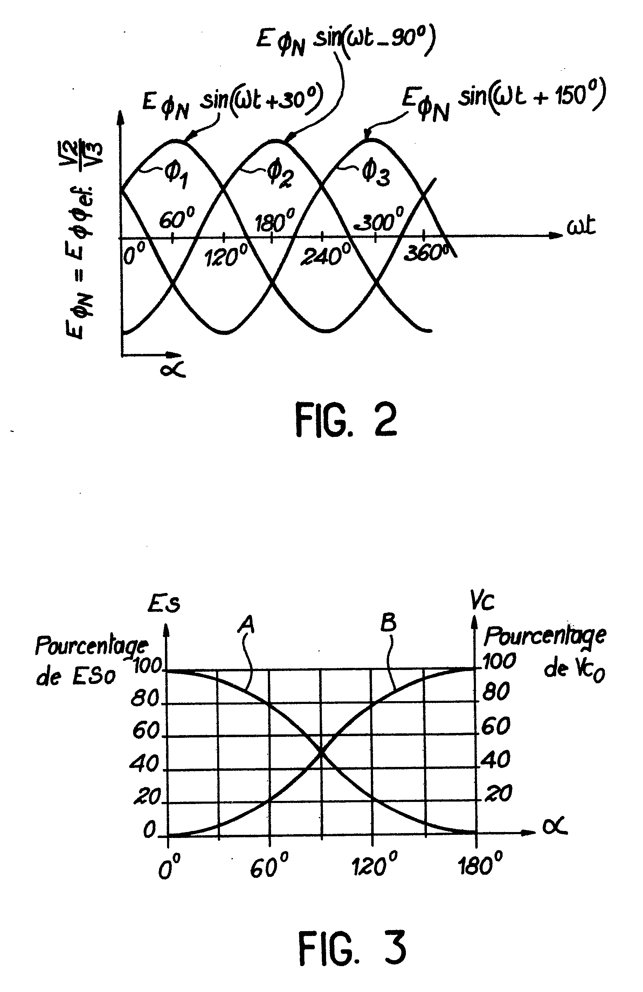

La figure 2 est un diagramme des signaux représentant les tensions entre les différentes phases $\Phi_1$, $\Phi_2$, $\Phi_3$ du secteur et la ligne neutre $\Phi$N de celui-ci, en fonction des angles $\alpha = \omega t$. Sur cette figure, on a désigné par $\Phi_1$, $\Phi_2$, $\Phi_3$ les signaux représentatifs des différentes phases, tandis que E$_\Phi$N désigne la valeur crête de la tension entre phase et neutre; cette valeur crête peut s'exprimer par la relation:

$$E_{\Phi N} = E_{\Phi\Phi_{ef}} \cdot \frac{\sqrt{2}}{\sqrt{3}}$$

(E$_{\Phi\Phi_{ef}}$ désigne la tension efficace entre phases).

La valeur de la tension sur la sortie S, aux chutes près de tension dans les redresseurs et dans la self L, est donnée par la relation:

$$E_S = \frac{3\sqrt{2}}{\pi} \cdot E_{\Phi\Phi ef} \cdot \frac{1 + \cos\alpha}{2} \quad (1)$$

Les différents termes de cette relation sont définis comme suit:
— $E_s$: valeur moyenne de la tension redressée en S, en présence d'une charge résistive,
— $E_{\Phi\Phi ef}$.: tension efficace entre phases,
— $\alpha$: angle de retard à l'amorçage des thyristors.

Pour le thyristor $Th_1$, $\alpha$ peut varier dans une plage qui correspond à $E_{\Phi 1} > E_{\Phi 3}$,

Pour le thyristor $Th_2$, $\alpha$ peut varier dans une plage qui correspond à $E_{\Phi 2} > E_{\Phi 1}$,

Pour le thyristor $Th_3$, $\alpha$ peut varier dans la plage qui correspond à $E_{\Phi 3} > E_{\Phi 2}$.

Dans ces relations, on a désigné par $E_{\Phi 1}$, $E_{\Phi 2}$, $E_{\Phi 3}$ l'amplitude de la tension pour les différentes phases $\Phi_1$, $\Phi_2$, $\Phi_3$ du secteur.

La valeur instantanée de la tension redressée (aux bornes de la diode de récupération D) résulte de la différence entre la tension de la phase correspondant au thyristor conducteur et la tension de la phase la plus négative à ce même instant.

La figure 3 permet de mieux comprendre le fonctionnement du dispositif de compensation conforme à l'invention.

Si l'on désigne par $E_{so}$ la tension moyenne redressée par un angle de retard a nul, il est possible, à partir de la relation (1) mentionnée plus haut, d'obtenir la courbe A représentant les variations de la tension de sortie $E_s$, en fonction de $\alpha$, pour une valeur constante de $E_{\Phi\Phi}$ (tension entre phases). Cette courbe est de la forme:

$$E_S = E_{SO} \cdot \frac{1 + \cos\alpha}{2}$$

Si l'on désire faire varier $E_s$ linéairement, à l'aide d'une tension de contrôle $V_c$, il faut établir une courbe de variation de $\alpha$ en fonction de la tension de contrôle, correspondant à la courbe B. Cette courbe est de la forme:

$$\alpha = \text{arc cos}\ (1{-}2\ V_c/V_{co})$$

En considérant par exemple la commande du thyristor $Th_1$ (voir figure 2), les repères de synchronisme (peage dans laquelle peut varier l'instant d'amorçage) correspondent aux coïncidences des valeurs de $E_{\Phi 1}$ et $E_{\Phi 3}$ ($\alpha = 0°$ et $\alpha = 180°$). Il est alors possible d'établir la commande de gâchette de chaque thyristor, à l'instant où la valeur de la tension de contrôle $V_c$, correspond à la valeur instantanée d'un signal de synchronisation $V_{co}$, correspondant à la courbe B, d'amplitude convenable. Dans le dispositif de la figure 1, les signaux de synchronisation correspondant à la courbe B, sont désignés par SYNC (figure 1) et sont obtenus sur les sorties des détecteurs de seuil DS.

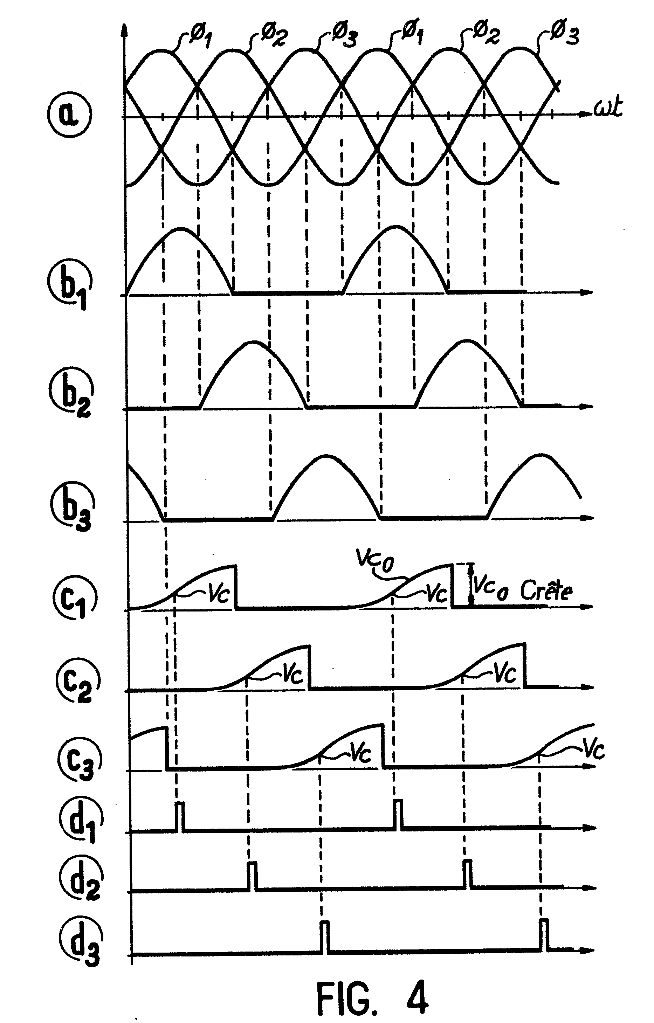

La figure 4 est un diagramme des différents signaux qui apparaissent sur les sorties de certains moyens du dispositif. Le diagramme a représente, en fonction de $\alpha = \omega t$, les variations de tension entre phase et neutre, pour les différentes phases $\Phi_1$, $\Phi_2$, $\Phi_3$ du secteur.

Les diagrammes $b_1$, $b_2$, $b_3$ représentent les signaux de sortie de chacun des thyristors $Th_1$, $Th_2$, $Th_3$; on suppose sur ces diagrammes que chaque thyristor est conducteur pendant une demi-période du signal d'entrée.

Les diagrammes $c_1$, $c_2$, $c_3$ représentent les signaux de synchronisation SYNC obtenus sur les sorties de chacun des détecteurs de seuil DS des moyens de synchronisation 15. Sur cette figure, ces signaux sont désignés par $V_{co}$ et on a désigné par $V_c$ la tension de contrôle obtenue à la sortie 7 du circuit de prélèvement 9. C'est cette tension de contrôle qui est comparée à la tension de sortie des moyens de synchronisation 15, pour commander l'angle d'amorçage des thyristors du convertisseur.

Enfin, les diagrammes $d_1$, $d_2$, $d_3$ représentent les impulsions de sortie du générateur 4, appliquées respectivement aux thyristors $Th_1$, $Th_2$, $Th_3$ du convertisseur 3. Ces impulsions, comme on l'a mentionné plus haut, peuvent être obtenues par l'application des signaux de sortie de chaque comparateur des moyens de compensation 6, sur les entrées respectives de bascules de détection de seuils, dont les sorties commandent les gâchettes des thyristors correspondants.

On va maintenant donner quelques résultats numériques concernant le dispositif en relation avec différentes hypothèses de fonctionnement de celui-ci.

On suppose tout d'abord que l'on désire obtenir, en sortie du convertisseur, une tension aussi constante que possible, quelles que soient les variations de la tension du secteur, à l'entrée du convertisseur. On dispose d'une tension entre phases $E_{\Phi\Phi}$, à l'entrée du convertisseur et on désire obtenir une tension $E_s$ en sortie, inférieure à $E_{so}$. Pour la tension nominale, $E_{\Phi\Phi \cdot nom.}$, entre phases, on obtient un angle d'amorçage $\alpha_{nom.}$.

$$\alpha_{nom.} = \text{arc cos}\ \left(\frac{2\pi \cdot E_s}{3\sqrt{2} \cdot E_{\Phi\Phi nom.}} - 1\right)$$

Si on appelle $V_{cnom.}$ la valeur nominale de la tension de contrôle $V_c$ et si l'on désigne par $V_{co.nom.}$ l'amplitude maximale de la tension de contrôle $V_c$, on obtient:

$$V_{cnom.} = V_{co.\ nom.} \cdot \frac{1 - \cos\alpha}{2}$$

Exemple numérique

Si $E_{\Phi\Phi.nom.} = 208\ V$ efficaces, et $E_{s.nom.} = 220\ V$ continu, et si l'on choisit par exemple $V_{co.nom.} = 5\ V$, on obtient $\alpha_{nom.} = 55°, 5$ et $V_{c.nom.} = 1,084\ V$.

Compte tenu de la façon dont les signaux de synchronisation sont élaborés, leur amplitude $V_{co}$ est proportionnelle à la tension du réseau.

On a vu plus haut, la façon dont $V_c$ pouvait, pour une tension secteur donnée, agir sur la tension de sortie $E_s$; on va maintenant analyser en fonction de différentes hypothèses, l'influence de la tension de contrôle $V_c$, quand $E_{\Phi\Phi}$ varie.

— Première hypothèse:
On maintient $V_c$ constant quand la tension $E_{\Phi\Phi}$ entre phases varie. L'amplitude des signaux de synchronisation ($V_{co}$) varie dans la même proportion que $E_{\Phi\Phi}$. $V_c$ restant constant, l'angle de retard

à l'amorçage $\alpha$ change, ce qui a pour effet de changer le rapport $E_s/E_{so}$ dans le même sens et dans la même proportion que $E_{\Phi\Phi}$.

$E_{so}$ variant déjà dans le même sens et dans la même proportion que $E_{\Phi\Phi}$, la tension de sortie $E_s$ varie d'un rapport:

$$\left(\frac{E_{\Phi\Phi}}{E_{\Phi\Phi.nom.}}\right)^2$$

Dans l'exemple numérique, si $E_{\Phi\Phi}$ varie de +10% et prend donc la valeur 228,8 V ef, $E_s$ varie de +21%, soit $E_s = 266,2$ V.

— Deuxième hypothèse:

$V_c$ varie dans le même sens et dans les mêmes proportions que $E_{\Phi\Phi}$. L'amplitude des signaux de synchronisation ($V_{co}$) varie dans la même proportion que $E_{oo}$. $V_c$ variant dans les mêmes proportions et $\alpha$ restant, $E_s/E_{so}$ reste constant.

Il en résulte que la tension de sortie $E_s$ varie dans le rapport:

$$\left(\frac{E_{\Phi\Phi}}{E_{\Phi\Phi.nom.}}\right).$$

Dans l'exemple numérique, si $E_{\Phi\Phi}$ varie de +10% et prend la valeur 228,8 V ef, $E_s$ varie de +10% et prend la valeur $E_s = 242$ V.

— Troisième hypothèse:

Il existe une valeur caractéristique de $E_{\Phi\Phi}$ pour laquelle à angle de retard $\alpha$ nul, on obtient $E_{s.nom.}$, c'est-à-dire que quelle que soit la valeur de la tension de commande $V_c$, si $E_{\Phi\Phi}$ descend en dessous de cette valeur caractéristique, il n'est plus possible d'obtenir $E_{s.nom.}$.

Si pour cette valeur, $V_c$ est nulle, $\alpha = 0$ et $E_s$ $E_{s.nom.}$.

Il en résulte que si $E_{\Phi\Phi}$ varie entre cette valeur caractéristique et sa valeur nominale, $V_c$ varie proportionnellement entre 0 et sa valeur nominale et la tension de sortie conserve une valeur constante.

Dans l'exemple numérique, si $E_{s.nom.} = 220$ V et $E_{\Phi\Phi.nom.} = 208$ V ef, pour conserver $E_s$ à sa valeur nominale, avec un angle $\alpha$ nul (donc $\cos \alpha = 1$),

il faut au minimum que $E_{\Phi\Phi}$ $220\dfrac{\pi}{3\sqrt{2}}$ soit approximativement égale à 163 V ef, soit une différence de −22% par rapport à $E_{\Phi\Phi.nom.}$.

Pour cette valeur, $V_c = 0$ et lorsque $E_{\Phi\Phi}$ varie entre −22% et 0, $V_c$ varie entre 0 et 1,084 V la tension de sortie reste constante et égale à 220 V.

Cette fonction est facile à réaliser à l'aide du circuit de prélèvement 9 de la figure 2.

La tension $V_A$ sur la sortie A des ponts redresseurs $P_1$, $P_2$, $P_3$ est déterminée en fonction des besoins, par le rapport de transformation N des transformateurs $T_1$, $T_2$, $T_3$. Elle suit proportionnellement les variations de tension réseau. Supposons pour simplifier que sa valeur nominale est de 20,8 V; quand $E_{\Phi\Phi} = 163$ V ef., la tension $V_A$ sur la sortie A est égale à 16,3 V. Si $V_z$ (tension aux bornes de la diode de Zener) vaut 16,3 V, la tension $V_B$ en B est égale à 0 pour $E_{\Phi\Phi} = 163$ V ef.,

20,8 V pour $E_{\Phi\Phi} = 208$ V ef. et 22,9 V pour $E_{\Phi\Phi} = 229$ V ef.

Dans l'exemple décrit, on choisit la valeur de $R_2$ et $R_3$ de façon à obtenir une tension de contrôle $V_c = 1,084$ V en régime nominal.

On a alors:

$$V_{B.nom.} = V_{A.nom.} - V_z = 20,8 \text{ V}{-}16,3 \text{ V} = 4,5 \text{ V}$$

Pour avoir $V_{c.nom.} = 1,084$ V, il faut:

$$\frac{R_2 + R_3}{R_3} = \frac{4,5}{1,084},$$

soit $R_2 = 3,15$ $R_3$.

Il est donc possible, à partir d'un dispositif extrêmement simple, d'obtenir d'excellentes performances. Un tel dispositif n'exclut pas la possibilité d'utiliser un régulateur associé comprenant, de manière connue, un amplificateur d'erreurs.

**Revendications**

1. Dispositif automatique de compensation des variations de tension ($E\Phi\Phi$) du secteur électrique (2) sinusoïdale polyphasé, appliqué à un convertisseur alternatif-continu (3), ce convertisseur comprenant pour chaque phase ($\Phi$1, $\Phi$2, $\Phi$3) du secteur, au moins un redresseur (Th1, Th2, Th3) à déclenchement contrôlé par impulsions, ces impulsions permettant de contrôler l'angle d'amorçage ($\alpha$) de chaque redresseur à déclenchement et étant fournies par un générateur d'impulsion (4) à périodes réglables, pour chaque phase du secteur, ledit dispositif de compensation comprenant pour chaque phase un générateur (15) de signal en dents de scie (SYNC, VCO) d'amplitude proportionnelle à la tension du secteur ($E\Phi\Phi$), un générateur (5) de tension continue de commande (VC), des moyens (10, 11, 12) pour comparer lesdits signaux en dents de scie (SYNC, VCO) et ladite tension de commande et pour déclencher lesdits redresseurs (Th1, Th2, Th3) lorsque lesdits signaux en dents de scie (SYNC, VCO) coïncident avec ladite tension de commande (VC), caractérisé en ce que chacun desdits générateurs (15) produit ledit signal en dents de scie (SYNC, VCO) par intégration par rapport au temps des signaux obtenus par redressement mono-alternance d'un signal proportionnel à tension du secteur ($E\Phi\Phi$), la tension dudit signal en dents de scie (SYNC, VCO) étant nulle par rapport à la masse du circuit au début de chaque demi-alternance,

— et en ce que ledit générateur (5) de ladite tension continue de commande (VC) fournit une tension (VC) nulle par rapport à la masse du circuit lorsque la tension du secteur est inférieur à une valeur déterminée et dont la variation est proportionnelle à la variation de tension du secteur ($E\Phi\Phi$) au-dessus de cette valeur déterminée.

2. Dispositif selon la revendication 1, caractérisé en ce que ledit générateur (5) de tension de commande (VC) comprend des moyens (8) reliés à chaque phase du secteur pour redresser la tension du secteur et des moyens de prélèvement (9) d'une tension de commande (Vc) présentant une fraction de la valeur prédéterminée de cette tension redressée, les moyens de compensation comprenant pour chaque phase du secteur un comparateur (10, 11, 12) dont une première entrée (13) est reliée à une sortie (7) des moyens de prélèvement (9) et dont l'autre entrée (14) est reliée à la sortie du générateur (15) de signal en dents de scie correspondant, les signaux de sortie des comparateurs étant appliqués à des entrées de commande du générateur d'impulsions (4) pour commander le réglage de la période des impulsions de déclenchement de chaque redresseur à déclenchement (Th1, Th2, Th3).

3. Dispositif selon la revendication 2, caractérisé en ce que ledit générateur (5) de tension de commande (Vc) comprend pour chaque phase du secteur un transformateur (T1, T2, T3) dont le primaire est relié à la phase correspondante du secteur et dont le secondaire alimente un pont redresseur (P1, P2, P3), les tensions redressées des différentes phases étant appliquées au moyens de prélèvement (9) qui sont constitués par un circuit comprenant une diode de Zener (Z) et une résistance (R1) de limitation de courant dans cette diode, la sortie (7) des moyens de prélèvement étant constituée par une borne commune à deux résistances (R2, R3) reliées en série et connectées en parallèle avec la résistance de limitation (R1).

4. Dispositif selon l'une des revendications 1 à 3, caractérisé en ce que ledit générateur (15) de signal en dents de scie comprend pour chaque phase (Φ1, Φ2, Φ3), un transformateur (T4, T5, T6) dont le primaire est relié à la phase correspondante du secteur et dont le secondaire alimente un circuit intégrateur (I1, I2, I3) par l'intermédiaire d'un redresseur (D4, D5, D6), des détecteurs de seuil (DS) étant respectivement reliés aux sorties des intégrateurs et permettant d'assurer la retombée du signal de sortie de l'intégrateur, les sorties de ces détecteurs de seuil constituant les sorties desdits générateurs (15) de signal en dents de scie.

5. Dispositif selon l'une des revendication 1 à 4, caractérisé en ce que le générateur (4) d'impulsions de déclenchement est constitué, pour chaque phase (Φ1, Φ2, Φ3) par une bascule à détection de seuil dont l'entrée constitue une entrée de commande du générateur (4) et dont la sortie est reliée à une gâchette (17, 19, 21) de déclenchement du redresseur à déclenchement (Th1, Th2, Th3) correspondant, l'entrée de cette bascule étant reliée à la sortie des moyens de comparaison (10, 11, 12) associée à la phase correspondante.

**Claims**

1. Automatic device for compensating for fluctuations of the sinusoidal polyphase voltage (EΦΦ) of the electric mains supply, applied to an ac/dc converter (3), this converter comprising for each phase (Φ1, Φ2, Φ3) of the mains supply, at least one rectifier (Th1, Th2, Th3) switched under the control of pulses, these pulses permitting control of the firing angle (α) of each switched rectifier, and being supplied by a pulse generator (4) having adjustable periods, for each phase of the mains supply, the said compensating device comprising for each phase a sawtooth signal (SYNC, VCO) generator (15) having an amplitude proportional to the mains supply voltage (EΦΦ), a d.c. control voltage (VC) generator (5), means (10, 11, 12) for comparing the said sawtooth signals (SYNC, VCO) and the said control voltage and for triggering the said rectifiers (Th1, Th2, Th3) when the said sawtooth signals (SYNC, VCO) coincide with the said control voltage (VC), characterised in that each of the said generators (15) generates the said sawtooth signal (SYNC, VCO) by integration with respect to time of the signals obtained by half-wave rectification of a signal proportional to the supply voltage (EΦΦ), the voltage of the said sawtooth signal (SYNC, VCO) being zero with respect to the ground of the circuit at the beginning of each half-cycle,

– and in that the said generator (5) of the said d.c. control voltage (VC) supplies a voltage (VC) which is zero with respect to the ground of the circuit when the mains supply voltage is lower than the specific value and of which the variation is proportional to the variation of the mains supply voltage (EΦΦ) above this specific value.

2. Device according to claim 1, characterised in that the said control voltage (VC) generator (5) comprises means (8) connected to each phase of the mains supply for rectifying the mains supply voltage and means (9) for deriving a control voltage (VC) having a fraction of the predetermined value of this rectified voltage, the compensation means comprising for each phase of the supply, a comparator (10, 11, 12) of which a first input (13) is connected to an output (7) of the derivation means (9) and of which the other input (14) is connected to the output of the corresponding sawtooth signal generator (15), the output signals of the comparators being fed to control inputs of the pulse generator (4) in order to control the adjustment of the period of the switching pulses of each switched rectifier (Th1, Th2, Th3).

3. Device according to claim 2, characterised in that the said control voltage (VC) generator (5) comprises for each phase of the supply a transformer (T1, T2, T3) of which the primary is connected to the corresponding mains supply phase and of which the secondary feeds a rectifier bridge (P1, P2, P3), the rectified voltages of the different phases being fed to the derivation means (9) which are formed by a circuit comprising a Zener diode (Z) and a resistor (R1) for limiting the current in this diode, the output (7) of the derivation means being formed by a terminal common to two resistors (R2, R3) connected in series and connected in parallel with the limiting resistor (R1).

4. Device according to any one of claims 1 to 3, characterised in that the said sawtooth signal generator (15) comprises, for each phase (Φ1, Φ2, Φ3), a transformer (T4, T5, T6) of which the primary is connected to the corresponding phase of the mains supply and of which the secondary feeds an integrator circuit (I1, I2, I3) via a rectifier (D4, D5, D6), threshold detectors (DS) being respectively connected to the output of the integrators and assuring the decay of the output signal of the integrator, the outputs of these threshold detectors forming the outputs of the said sawtooth signal generators (15).

5. Device according to any of claims 1 to 4, characterised in that the generator (4) of switching pulses is formed, for each phase ($\Phi1$, $\Phi2$, $\Phi3$), by a threshold detector flipflop of which the input forms a control input for the generator (4) and of which the output is connected to a trigger (17, 19, 21) for switching the corresponding switching rectifier (Th1, Th2, Th3), the input of this flipflop being connected to the output of the comparator means (10, 11, 12) associated with the corresponding phase.

## Patentansprüche

1. Vorrichtung zur automatischen Kompensation von Schwankungen der sinusförmigen Spannung (E$\Phi\Phi$) des mehrphasigen Stromnetzes, angewendet auf einen Wechselstrom-Gleichstrom-Wandler (3), welcher für jede Phase ($\Phi1$, $\Phi2$, $\Phi3$) des Netzes wenigstens einen Gleichrichter (Th1, Th2, Th3) mit durch Impulse gesteuerter Auslösung enthält, wobei diese Impulse die Steuerung des Zündwinkels ($\alpha$) jedes auslösbaren Gleichrichters gestatten und von einem Impulsgenerator (4) geliefert werden, der mit für jede Phase des Netzes regulierbaren Perioden arbeitet, wobei die Kompensationsvorrichtung für jede Phase einen Generator (15) zur Erzeugung eines Sägezahnsignals (SYNC, VCO) enthält, dessen Amplitude proportional zur Spannung des Netzes (E$\Phi\Phi$) ist, einen Generator (5) zur Erzeugung einer Steuergleichspannung (VC) enthält, Mittel (10, 11, 12) umfasst, um die Sägezahnsignale (SYNC, VCO) mit der Steuerspannung zu vergleichen und die genannten Gleichrichter (Th1, Th2, Th3) auszulösen, wenn die Sägezahnsignale (SYNC, VCO) mit der genannten Steuerspannung (VC) übereinstimmen, dadurch gekennzeichnet, dass jeder der genannten Generatoren (15) das genannte Sägezahnsignal (SYNC, VCO) durch über die Zeit erfolgende Integration der Signale erzeugt, welche durch Gleichrichtung einer Halbwelle eines Signals erhalten werden, das proportional zur Netzspannung (E$\Phi\Phi$) ist, wobei die Spannung des genannten Sägezahnsignals (SYNC, VCO) zu Beginn jeder Halbwelle gegenüber der Masse der Schaltung gleich Null ist;
– und dass der genannte Generator (5) für die Erzeugung der genannten Steuergleichspannung (VC) eine Spannung (VC) erzeugt, die gegenüber der Masse der Schaltung gleich Null ist, wenn die Netzspannung niedriger ist als ein bestimmter Wert, und deren Änderung proportional zur Änderung der Netzspannung (E$\Phi\Phi$) oberhalb dieses bestimmten Wertes ist.

2. Vorrichtung nach Anspruch 1, dadurch gekennzeichnet, dass der genannte Generator (5) zur Erzeugung der Steuerspannung (VC) Mittel (8) enthält, welche mit jeder Netzphase verbunden sind, um die Spannung des Netzes gleichzurichten, und Abnahmemittel (9) zum Abgreifen einer Steuerspannung (Vc) enthält, welche einen Bruchteil des vorbestimmten Wertes dieser gleichgerichteten Spannung aufweist, wobei die Kompensationsmittel für jede Netzphase einen Komparator (10, 11, 12) enthalten, dessen erster Eingang (13) mit einem Ausgang (7) der Abnahmemittel (9) und dessen anderer Eingang (14) mit dem Ausgang des entsprechenden Sägezahnsignalgenerators (15) verbunden ist, und wobei die Ausgangssignale der Komparatoren an Steuereingänge des Impulsgenerators (4) angelegt sind, um die Verstellung der Impulsperioden zur Auslösung jedes auslösbaren Gleichrichters (Th1, Th2, Th3) zu steuern.

3. Vorrichtung nach Anspruch 2, dadurch gekennzeichnet, dass der genannte Generator (5) zur Erzeugung der Steuerspannung (Vc) für jede Netzphase einen Transformator (T1, T2, T3) enthält, dessen Primärwicklung mit der entsprechenden Phase des Netzes verbunden ist und dessen Sekundärwicklung eine Gleichrichterbrücke (P1, P2, P3) speist, wobei die gleichgerichteten Spannungen der verschiedenen Phasen an die Abnahmemittel (9) angelegt sind, welche durch eine Schaltung gebildet sind, die eine Zenerdiode (Z) und einen Widerstand (R1) zur Begrenzung des Stromes in dieser Diode enthält, wobei der Ausgang (7) der Abnahmemittel durch einen Anschluss gebildet ist, der zwei Widerständen (R2, R3) gemeinsam ist, welche in Reihe geschaltet sind und parallel mit dem Begrenzungswiderstand (R1) geschaltet sind.

4. Vorrichtung nach einem der Ansprüche 1 bis 3, dadurch gekennzeichnet, dass der genannte Sägezahnsignalgenerator (15) für jede Phase ($\Phi1$, $\Phi2$, $\Phi3$) einen Transformator (T4, T5, T6) enthält, dessen Primärseite mit der entsprechenden Phase des Netzes verbunden ist und dessen Sekundärseite eine Integratorschaltung (I1, I2, I3) über einen Gleichrichter (D4, D5, D6) speist, wobei Schwellwertdetektoren (DS) jeweils mit den Integratorausgängen verbunden sind und das Wiederabsenken des Ausgangssignals des Integrators gewährleisten und wobei die Ausgänge dieser Schwellwertdetektoren die Ausgänge der genannten Sägezahnsignalgeneratoren (15) bilden.

5. Vorrichtung nach einem der Ansprüche 1 bis 4, dadurch gekennzeichnet, dass der Auslöseimpulsgenerator (4) für jede Phase ($\Phi1$, $\Phi2$, $\Phi3$) durch eine Schwellwertdetektor-Kippschaltung gebildet ist, deren Eingang einen Steuereingang des Generators (4) bildet und deren Ausgang mit einer Auslöseelektrode (17, 19, 21) des entsprechenden auslösbaren Gleichrichters (Th1, Th2, Th3) verbunden ist, wobei der Eingang dieser Kippschaltung mit dem Ausgang der Komparatormittel (10, 11, 12) verbunden ist, welche der entsprechenden Phase zugeordnet sind.

# FIG. 1

$$E\phi_N \sin(\omega t - 90^0)$$

$$E\phi_N \sin(\omega t + 30^0)$$

$$E\phi_N \sin(\omega t + 150^0)$$

$E\phi_N = E\phi\phi_{ef.} \frac{\sqrt{2}}{\sqrt{3}}$

$\phi_1$  $\phi_2$  $\phi_3$

$60^0$  $180^0$  $300^0$

$0^0$  $120^0$  $240^0$  $360^0$

$\omega t$

$\alpha$

## FIG. 2

$Es$  $Vc$

A  B

Pourcentage de $ESo$  Pourcentage de $Vc_0$

100  100

80  80

60  60

40  40

20  20

0

$\alpha$

$0^0$  $60^0$  $120^0$  $180^0$

## FIG. 3

0 057 340

FIG. 4

13